# EUROPÄISCHE PATENTANMELDUNG

(11) **EP 3 293 219 A1**
(43) Veröffentlichungstag der Anmeldung: **14.03.2018**
(21) Anmeldenummer: 16188281.6
(22) Anmeldetag: 12.09.2016
(51) Int. Cl.: C08G 59/00, C04B 40/00

(54) **ZWEIKOMPONENTEN-MÖRTELMASSE UND IHRE VERWENDUNG**

(71) Anmelder: HILTI Aktiengesellschaft, 9494 Schaan (LI)
(72) Erfinder: Cakmak, Mesut, 81375 München (DE); Kumru, Memet-Emin, 86199 Augsburg (DE)
(74) Vertreter: Hilti Aktiengesellschaft Corporate Intellectual Property

(57) **Zusammenfassung**

Eine Zweikomponenten-Mörtelmasse umfasst mindestens eine Harzkomponente (A), die als härtbaren Bestandteil mindestens ein durch Additionsreaktion polymerisierbares Harz auf Epoxidbasis enthält, und eine Härterkomponente (B), die ein Härtungsmittel für das Harz der Harzkomponente (A) enthält, dadurch gekennzeichnet, dass die Zweikomponenten-Mörtelmasse mindestens ein Additiv der Formel I enthält:

Aₙ(L)ₘ(X)ₚ (Formel I)

wobei A für Phosphor, Bor, Aluminium, Titan oder Zirkonium steht,
X gleich oder verschieden sein kann und für einen Alkoxy-, Aryloxy- oder Acyloxyrest steht,
L gleich oder verschieden sein kann und für wenigstens einen Liganden steht,
n für die Wertigkeit von A steht, und
p eine ganze Zahl von 1 bis n bedeutet.
m 0 oder eine ganze Zahl von 1 bis n-1 bedeutet und
n = m+p ist.

## Beschreibung

Die Erfindung betrifft eine Zweikomponenten-Mörtelmasse mit mindestens einer Harzkomponente (A), die als härtbaren Bestandteil mindestens ein durch Additionsreaktion polymerisierbares Harz auf Epoxidbasis enthält, und einer Härterkomponente (B), die ein Härtungsmittel für das Harz der Harzkomponente (A) enthält. Gegenstand der Erfindung ist ferner die Verwendung der Mörtelmasse zur chemischen Befestigung von Bauteilen wie Ankergewindestangen, Bewehrungseisen, Gewindehülsen und Schrauben in Bohrlöchern, die in einen mineralischen Untergrund eingebracht sind.

Zur sicheren Befestigung von Bauteilen, wie Ankergewindestangen, Bewehrungseisen, Gewindehülsen und Schrauben, in einem mineralischen Untergrund wie Beton, Naturstein oder Putz werden zunächst die Bohrlöcher zur Aufnahme der zu befestigenden Bauteile mit den entsprechenden Abmessungen in den mineralischen Untergrund gebohrt. Anschließend werden die Bohrlöcher von Bohrstaub befreit, und die Zweikomponenten-Mörtelmasse wird nach Vermischen der Harzkomponente mit der Härterkomponente in das Bohrloch eingebracht. Danach wird das zu befestigende Bauteil in das mit der Mörtelmasse angefüllte Bohrloch eingeführt und justiert. Nach dem Aushärten der Mörtelmasse durch Umsetzung der Harzkomponente mit der Härterkomponente wird ein fester Halt des Bauteils im mineralischen Untergrund erreicht.

Das Tragverhalten der so befestigten Bauteile hängt von mehreren Einflussgrößen ab, die üblicherweise als interne und externe Größen klassifiziert werden. Zu den internen Einflussgrößen zählen die chemische Zusammensetzung der Mörtelmasse, ihr Herstellungsprozess und die Verpackung der Mörtelmasse, die typischerweise in zwei getrennten Behältern vorliegende Komponenten umfasst.

Zu den externen Einflussgrößen gehören unter anderem die Art der Bohrlochreinigung, die Güte des mineralischen Untergrunds, beispielsweise des Betons, seine Feuchtigkeit und seine Temperatur sowie die Art der Bohrlochherstellung.

Es ist weiter bekannt, dass die mechanischen Eigenschaften der ausgehärteten Mörtelmasse wesentlich durch die Qualität der Bohrlochreinigung und der Feuchtigkeit des mineralischen Untergrunds beeinflusst wird. In feuchten und/oder nur schlecht von Bohrstaub gereinigten Bohrlöchern tritt eine erhebliche Leistungsabnahme ein, die sich in verringerten Lastwerten der ausgehärteten Mörtelmasse zeigt.

Die WO 2011/113533 A1 betrifft ein Befestigungsmörtelsystem zum Einmörteln von Verankerungsmitteln auf der Basis von ein oder mehreren härtenden Reaktivharzen auf Epoxidbasis in Löcher oder Spalten, welches ein oder mehrere Silane enthält, die gegebenenfalls zur Teilnahme an der Polymerisierung mit dem Reaktivharz auf Epoxidbasis befähigte reaktive Gruppen und in jedem Falle siliziumgebundene hydrolysierbare Gruppen aufweisen. Als siliziumgebundene hydrolysierbare Gruppen in den ein oder mehreren Silanen werden Halogen-, Ketoximat-, Amino-, Aminoxy-, Mercapto-, Acyloxy-, Aryloxy-, Aralkyloxy- und insbesondere Alkyloxygruppen verwendet.

Die DE 10 2015 109 125 A1 betrifft eine Härterzusammensetzung für ein durch Additionspolymerisation härtbares Kunstmörtelsystem zum Einmörteln von Verankerungsmitteln in Löcher oder Spalten, wobei die Härterzusammensetzung oligomere Siloxane beinhaltet, die im Durchschnitt pro Molekül mindestens einen organischen Rest aufweisen. Der organische Rest trägt eine oder mehrere bei der Additionsreaktion mit Isocyanat- oder Epoxygruppen reaktive sekundäre und/oder primäre Amino- und/oder Thiolgruppen. Ferner weisen die Siloxane noch ein oder mehr hydrolysierbare, an Silizium gebundene Gruppen auf. Die Härterzusammensetzung kann daneben ein oder mehrere weitere übliche Zusätze beinhalten.

Diese im Stand der Technik bekannten Mörtelmassen zeigen bereits eine Verbesserung der Lastwerte in feuchten Bohrlöchern. Die Herstellung der im Stand der Technik verwendeten Silan- und Siloxanadditive ist jedoch aufwendig und kostenintensiv.

Gegenüber dem bekannten Stand der Technik besteht somit Bedarf an Zweikomponenten-Mörtelmassen mit guter Haftung in trockenen und feuchten Bohrlöchern, die einfach zu verarbeiten sind und Additive enthalten, die einfach in der Herstellung und kostengünstig sind.

Diese Aufgabe wird durch eine Zweikomponenten-Mörtelmasse gemäß nachstehendem Anspruch 1 gelöst.

Bevorzugte Ausführungsformen der erfindungsgemäßen Mörtelmasse sind in den Unteransprüchen angegeben, die wahlweise miteinander kombiniert werden können.

Gegenstand der Erfindung ist ferner die Verwendung der Masse zur chemischen Befestigung von Bauteilen wie Ankergewindestangen, Bewehrungseisen, Gewindehülsen und Schrauben in Bohrlöchern, die in mineralischem Untergrund, vorzugsweise Beton, vorliegen.

In ihrer allgemeinen Form umfasst die Erfindung eine Zweikomponenten-Mörtelmasse mit mindestens einer Harzkomponente (A), die als härtbaren Bestandteil mindestens ein durch Additionsreaktion polymerisierbares Harz auf Epoxidbasis enthält, und einer Härterkomponente (B), die ein Härtungsmittel für das Harz der Harzkomponente (A) enthält, dadurch gekennzeichnet, dass die Zweikomponenten-Mörtelmasse mindestens ein Additiv der Formel I enthält:

Aₙ(L)ₘ(X)ₚ (Formel I)

wobei A für Phosphor, Bor, Aluminium, Titan oder Zirkonium steht,
X gleich oder verschieden sein kann und für einen Alkoxy-, Aryloxy- oder Acyloxyrest steht,
L gleich oder verschieden sein kann und für wenigstens einen Liganden steht,
n für die Wertigkeit von A steht, und
p eine ganze Zahl von 1 bis n bedeutet.
m 0 oder eine ganze Zahl von 1 bis n-1 bedeutet und
n = m+p ist.

Die erfindungsgemäßen Additive machen den Einsatz von Silanen oder Siloxanen mit siliziumgebundenen hydrolysierbaren Resten überflüssig oder können die bekannten hydrolysierbaren Silane und Siloxanoligomere ganz oder teilweise ersetzen. Diese führt überraschenderweise zu einer guten und schnellen Aushärtung der chemischen Mörtel auch an der Grenzfläche, trotz der Abwesenheit von siliziumgebundenen substituierten Resten.

Mit den erfindungsgemäßen Additiven ist sowohl in trockenem als auch in wassergesättigtem Beton für hammergebohrte und diamantgebohrte Bohrlöcher eine Verbesserung der Mörtelleistung unter kritischen Bohrlochbedingungen möglich. Die Befestigung von Bauteilen unter Verwendung der erfindungsgemäßen Zweikomponenten-Mörtelmasse ergibt sowohl bei trockenen gereinigten Bohrlöchern als auch bei halbgereinigten und/oder feuchten Bohrlöchern hohe Lastwerte, die gegenüber siloxanfreien oder zum Teil auch silanhaltigen Massen erhöht sind, ohne auf Silane oder Siloxanoligomere des Stands der Technik zurückzugreifen.

In einer bevorzugten Ausführungsform enthalten die erfindungsgemäßen Zweikomponenten-Mörtelmassen keine Silan- oder Siloxanverbindung mit hydrolysierbaren Gruppen.

Der Ligand L kann aus der aus Acetoacetat, Alkyl, Halogenid, Phosphat, Pyrophosphat, Phosphit, Sulfat, Sulfit, CN, Cyclopentadienyl und Pentamethylcyclopentadienyl, Ether, wie Tetrahydrofuran, Pyridin und Morpholin bestehenden Gruppe ausgewählt sein. Von den Begriffen Phosphat, Pyrophosphat, Phosphit, Sulfat und Sulfit sind auch deren Ester und Halbester mit Alkoholen, insbesondere Alkoxyverbindungen mit 1 bis 24 C-atomen umfasst.

In einer bevorzugten Ausführungsform des Additivs der Formel I:

Aₙ(L)ₘ(X)ₚ (Formel I)

steht X für einen Alkoxyrest -OR¹ oder einen Acyloxyrest -O(C=O)R¹, worin R¹ jeweils eine wahlweise substituierte, lineare oder verzweigte Alkylgruppe mit 1 bis 24 C-Atomen bedeutet, bevorzugt mit 1 bis 18 C-Atomen und besonders bevorzugt mit 1 bis 8 C-Atomen.

Besonders bevorzugt steht X für einen Alkoxy- oder Acyloxyrest, der aus der aus -O-CH₃, -O-C₂H₅, -O-C₃H₇, -O-C₄H₉, -O-C₅H₁₁, -O-(CO)-CH₃, -O-(CO)-C₂H₅, -O-(CO)-C₃H₇, -O-(CO)-C₄H₉ und -O-(CO)-C₅H₁₁ bestehenden Gruppe ausgewählt ist, bevorzugt aus der aus -O-CH₃, -O-C₂H₅, -O-C₃H₇ und -O-C₄H₉, bestehenden Gruppe.

Der Rest X kann gleich oder verschieden sein. In einer bevorzugten Ausführungsform der Erfindung ist X gleich.

Bevorzugt ist m = 0 und n = p.

In einer weiteren bevorzugten Ausführungsform ist das Additiv ausgewählt aus der Trimethylphosphat, Triethylphosphat, Triethylborat, Triisopropylborat, Tributylborat, Triethylaluminat, Tetraethyltitanat, Tetraisopropyltitanat, Tetraethylzirkonat, Tetrabutylzirkonat, Tris(isooctadecanoato-o)(propan-2-olato)titanat (CAS No.: 61417-49-0), Isopropyl-dimethacryloylisostearyoyltitanat (CAS No.: 61548-33-2), Tris(dodecylbenzolsulfonat)isopropoxidtitanat (CAS No.: 61417-55-8), Isopropyl-tri(dioctylphosphato)titanat (CAS No.: 65345-34-8), Trimethacrylatmethoxyethoxyethoxidtitanat (CAS No.: 61436-48-4), Isopropyl-titan-tri(dioctylpyrophosphat) (CAS No.: 68585-78-4), Isopropyl-triacryloyltitanat (CAS No.: 61436-49-5), Bis(2-((2-aminoethyl)amino)ethanolato)(2-((2-aminoethyl)amino)ethanolato-O)(propan-2-olato)titanat (CAS No.: 65380-84-9), Tetraisopropoxytitanium (CAS No.: 68585-67-1), Tetraoctyl-di(ditridecylphosphite)titanat (CAS No.: 68585-68-2), Tetra(2,2-diallyloxymethyl-1-butyl)bis(ditridecylphosphite)titanat (CAS No.: 64157-14-8) bestehenden Gruppe.

Als komplexe Additive geeignet sind insbesondere Isopropyl-tri(dioctylpyrophosphat)-titanat oder Tetraoctyltitanat-bis(di-tridecylphosphit), die unter anderem von Kenrich-Chemicals Inc. erhältlich sind.

Unter einer "Zweikomponenten-Mörtelmasse" wird im Sinne der Erfindung eine Mörtelmasse verstanden, die aus einer härtbaren Harzkomponente und einer Härterkomponente für die Harzkomponente besteht, wobei die Harzkomponente und die Härterkomponente getrennt voneinander gelagert werden, sodass während der Lagerung keine Umsetzung der Härterkomponente mit der Harzkomponente erfolgt. Durch Vermischen der Härterkomponente mit dem Reaktivharz unmittelbar vor der Anwendung der Mörtelmasse wird die Aushärtung des Reaktivharzes gestartet. Bevorzugt liegt das Additiv in der Harzkomponente vor.

Nachstehend genannte Mengenangaben für die Zweikomponenten-Mörtelmasse verstehen sich als Gewichtsprozent in Bezug auf 100 Gewichtsprozent der Summe der Einzelkomponenten (Gesamtgewicht der Mörtelmasse), jedoch ohne das Additiv. Die Zweikomponenten-Mörtelmasse ohne das Additiv ergibt somit 100 Gew.-%.

Das erfindungsgemäße Additiv kann einzeln oder auch als Gemisch von Additiven vorliegen.

In einer bevorzugten Ausführungsform liegt das mindestens eine Additiv der Formel I in einem Anteil von 0,01 bis 10 Gew.-% vor, weiter bevorzugt in einem Anteil von 0,01 bis 5 Gew.-%, noch weiter bevorzugt in einem Anteil von 0,1 bis 5 Gew.-% und besonders bevorzugt in einem Anteil von 0,1 bis 3 Gew.-%, bezogen auf das Gesamtgewicht der Mörtelmasse aus den Komponenten (A) und (B).

Überraschenderweise wurde gefunden, dass bei schon bei geringen Additivanteilen an den Mörtelmassen eine verbesserte Anhaftung des ausgehärteten Mörtels an der Betonoberfläche sowie verbesserte Lastwerte von eingegossenen, im Baubereich üblicherweise verwendeten Befestigungsmittel, wie beispielweise Dübel, Anker, Gewindeschrauben und Bolzen in feuchtem und trockenem Beton erreicht werden können.

Die in den erfindungsgemäßen Zweikomponentenmörtelsystemen enthaltene Harzkomponente auf Epoxidbasis beinhaltet mindestens eine Epoxidkomponente, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10. Die Epoxidkomponente kann wahlweise weiteren Glycidylether als Reaktivverdünner beinhalten. Bei den Epoxidharzen der Epoxidkomponente handelt es sich vorzugsweise um Polyglycidylether eines mindestens zweiwertigen Alkohols oder Phenols, wie Novolak, Bisphenol F oder Bisphenol A, oder Gemische solcher Epoxide, die beispielsweise durch Umsetzung der entsprechenden mehrwertigen Alkohole mit Epichlorhydrin erhalten werden können. Geeignete Beispiele sind Hexandioldiglycidylether, Trimethylolpropan-triglycidylether, Novolak-Epoxidharze, Bisphenol-A-Epichlorhydrinharze und/oder Bisphenol-F-Epichlorhydrinharze, beispielsweise mit einem durchschnittlichen Molekulargewicht von Mₙ ≤ 2000 g/mol. Die Epoxidharze können beispielsweise ein Epoxidäquivalent von 120 bis 2000, vorzugsweise 150 bis 400, wie insbesondere 155 bis 195, beispielsweise 165 bis 185 aufweisen.

Bestimmte der oben genannten Epoxidverbindungen, wie Trimethylolpropantriglycidylether oder Hexandioldiglycidylether, die eine geringere Viskosität als aromatische Gruppen enthaltende Epoxide aufweisen, können auch als reaktive Verdünner eingesetzt werden.

Der Anteil der Epoxidkomponente an der Gesamtmasse des Zweikomponentensystems beträgt vorzugsweise 5 bis 90 Gew.-%, insbesondere 20 bis 80 Gew.-%, 30 bis 70 Gew.-% oder 40 bis 60 Gew.-%. Möglich sind auch Gemische von zwei oder mehr Epoxid-Komponenten. Geeignete Epoxidharze, Reaktivverdünner und Härter sind auch in dem Standardwerk von Michael Dornbusch, Ulrich Christ und Rob Rasing, "Epoxidharze", Vincentz Network GmbH & Co KG (2015), ISBN 13: 9783866308770, zu finden. Ddiese Verbindungen werden hier durch Bezugnahme aufgenommen.

Beispiele für weitere Bestandteile der Harzkomponente (A) sind Beschleuniger, Thixotropiermittel, Füllstoffe und weitere Additive sowie deren Mischungen.

Als Beschleuniger können beispielsweise tertiäre Amine, Imidazole oder tertiäre Aminophenole wie Tris-2,4,6-dimethylaminomethylphenol, Organophosphine, Lewis-Basen oder -Säuren wie Phosphorsäureester, oder Gemische von zwei oder mehr davon verwendet werden. Die Beschleuniger können in einer oder beiden Komponenten, bevorzugt in der Härterkomponente (B), beinhaltet sein. Bevorzugt sind die Beschleuniger in der Härterkomponente in einem Gewichtsanteil von 0,001 bis 15 Gew.-% enthalten.

In einer bevorzugten Ausführungsform enthält die Zweikomponenten-Mörtelmasse in der Harzkomponente (A) und/oder in der Härterkomponente (B) mindestens ein Thixotropiermittel. Als Thixotropiermittel können übliche Rheologiehilfsmittel verwendet werden, wie gefällte oder pyrogene Kieselsäure, Bentonite, Cellulosen und/oder Kaolin.

Die Thixotropiermittel können z.B. in einem Gewichtsanteil von 0,5 bis 30 Gew.-% zugesetzt werden, vorzugsweise von 2 bis 20 Gew.-%, bezogen auf das Gesamtgewicht der Mörtelmasse.

Schließlich kann die erfindungsgemäße Zweikomponenten-Mörtelmasse in der Harzkomponente (A) und/oder in der Härterkomponente (B) mindestens einen anorganischen Füllstoff enthalten. Als Füllstoffe dienen insbesondere Zemente wie Portlandzement oder Tonerdeszement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Die Füllstoffe können in einer oder in beiden Komponenten des Zweikomponentensystems vorhanden sein. Der Anteil an Füllstoffen beträgt vorzugsweise 0 bis 90 Gew.-%, beispielsweise 10 bis 90 Gew.-%, bevorzugt 15 bis 75 Gew.-% und weiter bevorzugt 20 bis 50 Gew.-%, bezogen auf das Gesamtgewicht der Mörtelmasse.

Ferner können auch weitere Additive zugesetzt werden, wie Weichmacher, nicht reaktive Verdünnungsmittel, Flexibilisatoren, Stabilisatoren, Rheologiehilfsmittel, Netzmittel, färbende Zusätze, wie Farbstoffe oder Pigmente, beispielsweise zum unterschiedlichen Anfärben der Komponenten zur besseren Kontrolle der Durchmischung, sowie Gemische der genannten Additive. Derartige weitere Additive können vorzugsweise in Gewichtsanteilen von insgesamt 0 bis 40 % zugesetzt sein, bezogen auf das Gesamtgewicht der Mörtelmasse.

Das Härtungsmittel der Härterkomponente (B) umfasst mindestens eine zur Epoxidhärtung gebräuchliche Verbindung. Bei den zur Epoxidhärtung gebräuchlichen Verbindungen, die als Reaktionspartner bei der Polyaddition dienen, handelt es sich insbesondere um Verbindungen mit zwei oder mehr funktionellen Gruppen, die aus der aus Amino , Imino, und Mercapto sowie Kombinationen davon bestehenden Gruppe ausgewählt sind. Geeignete Beispiele sind Amine, Thiole, Aminothiole und Gemische davon, beispielsweise wie in Michael Dornbusch, Ulrich Christ und Rob Rasing, "Epoxidharze", Vincentz Network GmbH & Co KG (2015) genannt, welches hier diesbezüglich durch Bezugnahme aufgenommen wird. Besonders bevorzugte Härtungsmittel sind die darin genannten Di- oder Polyamine und/oder Di- oder Polythiole.
Es können auch Mischungen von zwei oder mehr der genannten zur Epoxidhärtung gebräuchlichen Verbindungen verwendet werden bzw. beinhaltet sein.

Die zur Epoxidhärtung gebräuchlichen Verbindungen liegen vorzugsweise in Mengen von bis zu 50 Gew.-%, vorzugsweise von 5 bis 30 Gew.-%, insbesondere 10 bis 20 Gew.-% vor, bezogen auf die Gesamtmasse des Zweikomponentenmörtelsystems.

Bezogen auf das Gewicht der Härterkomponente (B) kann der Anteil der Härtungsmittel bei 1 bis 100 Gew.-% liegen, beispielsweise bei 3 bis 95 Gew.- %, bevorzugt 4 bis 95 Gew.-%, weiter bevorzugt 5 bis 90 Gew.-% und besonders bevorzugt 10 bis 80 Gew.-%.

Weitere Bestandteile der Härterkomponente (B) des erfindungsgemäßen Zweikomponentensystems können organische Lösungsmittel wie Benzylalkohol, Füllstoffe wie die oben für die Harzkomponente (A) genannten Füllstoffe und weitere der oben genannten Additive umfassen.

Die erfindungsgemäße Zweikomponenten-Mörtelmasse liegt vorzugsweise in Patronen, Kartuschen oder Folienbeuteln vor, die dadurch gekennzeichnet sind, dass sie zwei oder mehrere voneinander getrennte Kammern umfassen, in welchen die Harzkomponente (A) und die Härterkomponente (B) der Mörtelmasse reaktionsinhibierend voneinander getrennt angeordnet sind.

Die erfindungsgemäßen Zweikomponenten-Mörtelmassen können vorteilhaft die nachfolgende Gesamtzusammensetzung aus Harzkomponente (A) und Härterkomponente (B) aufweisen:
härtbares Epoxidharz in einem Anteil von 30 - 60 Gew.-%,
Thixotropiermittel in einem Anteil von 0 - 5,0 Gew.-%,
anorganische Füllstoffe in einem Anteil von 20 - 60 Gew.-%,
Härtungsmittel für Epoxide in einem Anteil von 10 bis 20 Gew.-%,
wenigstens ein Additiv der obigen Formel I in einem Anteil von 0,01 bis 10 Gew.-%, und
weitere Additive in einem Anteil von 0 bis 40 Gew.-%,
wobei die Summe der Gewichtsprozente 100 ergibt.

Das wenigstens eine Additiv der Formel I wird bevorzugt in einem Anteil von 0,1 bis 10 Gew.-%, bezogen auf 100 Gew.-% der Summe der Komponenten A + B zugefügt.

Zur bestimmungsgemäßen Anwendung werden die Harzkomponente (A) und die Härterkomponente (B) aus den getrennten Kammern entleert und in einer geeigneten Vorrichtung, beispielsweise einem Statikmischer oder einem Dissolver, gemischt. Die Mischung aus Harzkomponente (A) und Härterkomponente (B) wird danach mittels einer bekannten Injektionsvorrichtung in das zuvor gereinigte Bohrloch eingebracht. Anschließend wird das zu fixierende Bauteil in die Mörtelmasse eingesetzt und justiert.

Das Härtungsmittel der Härterkomponente (B) reagiert mit den Epoxiden der Harzkomponente (A) unter Polyaddition, sodass die Mörtelmasse unter Umgebungsbedingungen innerhalb weniger Stunden aushärtet.

Die erfindungsgemäße Zweikomponenten-Mörtelmasse zeigt eine verbesserte Haftung insbesondere an feuchtem Beton. Des Weiteren werden hohe Lastwerte auch bei feuchten Bohrlöchern und/oder bei schlechter Reinigung der in den mineralischen Untergrund eingebrachten Bohrlöcher erreicht. Es hat sich überraschenderweise gezeigt, dass die verbesserte Haftung sowie erhöhte Lastwerte auch ohne die Verwendung von hydrolysierbaren Silanen oder Siloxanoligomeren erreicht werden können.

Gegenstand der Erfindung ist daher auch die Verwendung der erfindungsgemäßen Zweikomponenten-Mörtelmasse zur chemischen Befestigung von Bauteilen, insbesondere Ankergewindestangen, Bewehrungseisen, Gewindehülsen und Schrauben, in Bohrlöchern, die in einem mineralischem Untergrund, vorzugsweise Beton, vorliegen.

Weitere Vorteile der Erfindung ergeben sich aus den folgenden Beispielen, die jedoch keiner Weise einschränkend zu verstehen sind.

### Herstellungsbeispiele 1 bis 30

Als Epoxidharz wurde in den Beispielen 1 bis 30 eine im Handel unter der Bezeichnung Araldite BY 20157 (Huntsman Advanced Materials) erhältliche Zusammensetzung verwendet. Der Aminhärter ist unter der Bezeichnung Aradur 30446 von Huntsman Advanced Materials erhältlich.

### Harz-Komponente:

- Harzmischung Araldite BY 20157 (61,4 Gew.-%)
- Quarzmehl (35,8 Gew.-%)
- Pyrogene Kieselsäure, hydrophobiert (2,8 Gew.-%)
- Additiv gemäß Formel I.

### Härter-Komponente:

- Aradur 30446 (60,7 Gew.-%)
- Quarzmehl (19,5 Gew.-%)
- Pyrogene Kieselsäure, hydrophobiert (4,3 Gew.-%)
- Tonerdezement (13,0 Gew.-%)
- Beschleuniger (2,5 Gew.-%)

Man bereitet zunächst die Harzkomponente (A) durch Vermischen der in oben angegebenen Bestandteile, wobei die Bestandteile zunächst per Hand vorgerührt und dann in einem Speedmixer 10 Sekunden lang bei 1000 U/min, danach 20 Sekunden lang bei 2500 U/min und anschließend 15 Sekunden lang bei 1500 U/min gemischt werden.

Zur Herstellung der Härterkomponente (B) werden oben angegebenen Bestandteile zusammengemischt, per Hand vorgerührt und dann im Speedmixer 10 Sekunden lang bei 1000 U/min, danach 20 Sekunden lang bei 2500 U/min und anschließend 15 Sekunden lang bei 1500 U/min gemischt.

Anschließend werden die Harzkomponente (A) und die Härterkomponente (B)_im berechneten Verhältnis zusammengeben, per Hand vorgerührt und anschließend im Speedmixer 10 Sekunden lang bei 1500 U/min gemischt.

Das Mischungsverhältnis der Komponenten (A) und (B) betrug in den Beispielen 1 bis 30 etwa 3:1 (w/w).

Das Additiv gemäß Formel I wird der Harzkomponente (A) in einer Menge zugesetzt, so dass sich der in den folgenden Tabellen genannte Massenanteil ergibt, bezogen auf das Gesamtgewicht der gemischten Komponenten (A) und (B).

Die in den Tabellen 1, 2 und 3 verwendeten Abkürzungen der eingesetzten Additive haben folgende Bedeutung:
KR 38S: Isopropyl-tri(dioctylpyrophosphat)-titanat, verzweigt und linear, erhältlich von Kenrich-Chemicals Inc.
KR 46B: Tetraoctyltitanat-bis(di-tridecylphosphit), verzweigt und linear, erhältlich von Kenrich-Chemicals Inc.
TEP: Triethylphosphat
TMP: Trimethylphosphat
TIB: Triisopropylborat
TEB: Triethylborat
TBB: Tributylborat

### Beispiel 31

### Überprüfung der Haftfestigkeiten auf diamantgesägter Betonoberfläche im Abzugstest (Pull-Off)

Als Untergrund wurde diamantgesägter Beton C20/25, jeweils feucht und trocken verwendet. Runde Metallplatten mit einem Ring aus doppelseitigem Klebeband als Abstandshalter werden auf dem zu verklebenden Untergrund befestigt und mit der Mörtelmasse gefüllt. Nach dem Aushärten bei Raumtemperatur (20°C), 1Tag) wird mit einem Haftprüfgerät (DYNA Z, Hersteller proceq) die Haftfestigkeit gemessen.

Die Ergebnisse sind der folgenden Tabelle 1 zu entnehmen:

**Tabelle 1: Haftfestigkeit im Abzugstest (Pull Off)**

| Beispiel | Additiv | Diamantgesägter trockener Beton [N/mm²] | Diamantgesägter feuchter Beton [N/mm²] |
|---|---|---|---|
| Vergleich | - | 3,90 | 0,90 |
| 1 | 0,3% KR 38S | 3,53 | 2,25 |
| 2 | 0,3% KR 46B | 3,41 | 2,16 |
| 3 | 0,8% TEP | 4,28 | 1,17 |
| 4 | 0,8% TIB | 4,20 | 2,28 |
| 5 | 0,8% TEB | 3,89 | 2,83 |
| 6 | 0,8% Zr(OBu)4 | 4,27 | 1,38 |
| 7 | 0,8% Zr(OEt)4 | 3,89 | 2,01 |
| 8 | 1,6% Al(OEt)3 | 3,47 | 0,97 |
| 9 | 1,6%Ti(OEt)4 | 4,28 | 1,01 |
| 10 | 1,6%Ti(OiPr)4 | 3,93 | 1,24 |

Wie aus den Testergebnissen ersichtlich ist, wird durch die Verwendung der Additive gemäß der obigen Formel I die Haftfestigkeit der erfindungsgemäßen Mörtelmassen sowohl auf trockenem und insbesondere auf wassergesättigtem Beton verbessert.

### Beispiel 32

### Überprüfung der Versagenslast (Auszugstests)

Zur Bestimmung der mit Zweikomponenten-Mörtelmassen gemäß den Beispielen 11 bis 30 erzielten Lastwerte verwendet man eine hochfeste Ankergewindestange M12, die in ein Bohrloch mit einem Durchmesser von 14 mm und einer Bohrlochtiefe von 72 mm mit der erfindungsgemäßen Zweikomponenten-Mörtelmasse eingedübelt wird. Man ermittelt nach einer vorbestimmten Aushärtezeit bei Raumtemperatur die mittlere Versagenslast durch zentrisches Ausziehen der Ankergewindestange mit enger Abstützung und bestimmt die mittlere Versagenslast von drei Ankern.

Die untersuchten Bohrlöcher wurden unter Verwendung eines Diamantbohrers präpariert, und das Bohrloch wurde mit zweimal mit Druckluft (6 bar) gereinigt, gebürstet und anschließend nochmals mit zweimal mit Druckluft ausgeblasen.

Zur Ermittlung der Lastwerte in feuchtem Beton wurden die Bohrlöcher mit Wasser gefüllt, wonach man das Wasser einen Tag lang einwirken ließ. Danach wurde das Wasser abgesaugt und die Ankerstange unter Verwendung der Mörtelmasse gesetzt. Die Aushärtung der Mörtelmasse erfolgte bei Raumtemperatur (21 ± 2 °C) während 24 Stunden.

Die Ergebnisse sind den folgenden Tabelle 2 und 3 zu entnehmen:

**Tabelle 2: Versagenslast im Auszugstest**

| Beispiel | Additiv | C20/25-trocken [N/mm2] | C20/25-feucht [N/mm2] | C50/60-feucht [N/mm2] |
|---|---|---|---|---|
| | | | | |
| Vergleich | - | 38,21 | 32,86 | 27,89 |
| 11 | 0,3% KR 38S | 34,79 | 34,09 | 31,11 |
| 12 | 0,1% KR 38S | 32,31 | 30,63 | 35,29 |
| 13 | 1,0% KR 38S | 34,74 | 34,58 | 34,41 |
| 14 | 0,8% TEB | 35,17 | 35,95 | 30,63 |
| 15 | 1,6% TEB | 36,49 | 35,92 | 33,89 |
| 16 | 0,8% Zr(OEt)4 | 32,16 | 34,77 | 32,17 |

**Tabelle 3: Versagenslast im Auszugstest (feuchter C50-Beton)**

| Beispiel | Additiv | C50-feucht ∅ [N/mm2] |
|---|---|---|
| Vergleich | - | 26,13 |
| 17 | 0,1% TBB | 27,47 |
| 18 | 0,5% TBB | 27,23 |
| 19 | 1,0% TBB | 26,14 |
| 20 | 0,1% KR 38S | 27,62 |
| 21 | 0,3% KR 38S | 28,23 |
| 22 | 0,5% KR 38S | 28,59 |
| 23 | 1,0% KR 38S | 26,40 |
| 24 | 0,01% ZrOBu4 | 27,13 |
| 25 | 0,1% ZrOBu4 | 28,19 |
| 26 | 0,5% ZrOBu4 | 27,62 |
| 27 | 1,0% ZrOBu4 | 28,42 |
| 28 | 1,6% ZrOBu4 | 30,01 |
| 29 | 3% ZrOBu4 | 33,49 |
| 30 | 5% ZrOBu4 | 31,42 |

Wie aus den Testergebnissen ersichtlich ist, wird durch die Verwendung der oben beschriebenen Additive auf Basis von Titan, Aluminium, Bor, Zirkonium und Phosphor in einem Anteil von 0,001 bis 10 Gew.-%, insbesondere 0,01 bis 5 Gew.-%, eine wesentliche Verbesserung der Auszugsfestigkeit der erfindungsgemäßen Mörtelmassen in trockenem und insbesondere wassergesättigtem Beton erreicht.

## Patentansprüche

1. Zweikomponenten-Mörtelmasse mit mindestens einer Harzkomponente (A), die als härtbaren Bestandteil mindestens ein durch Additionsreaktion polymerisierbares Harz auf Epoxidbasis enthält, und einer Härterkomponente (B), die ein Härtungsmittel für das Harz der Harzkomponente (A) enthält, **dadurch gekennzeichnet, dass** die Zweikomponenten-Mörtelmasse mindestens ein Additiv der Formel I enthält:
Aₙ(L)ₘ(X)ₚ (Formel I),
wobei A für Phosphor, Bor, Aluminium, Titan oder Zirkonium steht,
X gleich oder verschieden sein kann und für einen Alkoxy-, Aryloxy- oder Acyloxyrest steht,
L gleich oder verschieden sein kann und für wenigstens einen Liganden steht,
n für die Wertigkeit von A steht, und
p eine ganze Zahl von 1 bis n bedeutet.
m 0 oder eine ganze Zahl von 1 bis n-1 bedeutet und
n = m+p ist.

2. Zweikomponenten-Mörtelmasse nach Anspruch 1, wobei X ein Alkoxyrest -OR¹ oder ein Acyloxyrest -O(C=O)R¹ ist, worin R¹ jeweils eine wahlweise substituierte, lineare oder verzweigte Alkylgruppe mit 1 bis 24 C-Atomen bedeutet.

3. Zweikomponenten-Mörtelmasse nach Anspruch 1 oder 2, wobei X ein Rest ist, der aus der aus -O-CH₃, -O-C₂H₅, -O-C₃H₇, -O-C₄H₉, -O-C₅H₁₁, -O-(CO)-CH₃, -O-(CO)-C₂H₅, -O-(CO)-C₃H₇, -O-(CO)-C₄H₉ und -O-(CO)-C₅H₁₁, bestehenden Gruppe ausgewählt ist.

4. Zweikomponenten-Mörtelmasse nach einem der vorangehenden Ansprüche, wobei X ein aus der aus -O-CH₃, -O-C₂H₅, -O-C₃H₇ und -O-C₄H₉, bestehenden Gruppe ausgewählter Rest ist.

5. Zweikomponenten-Mörtelmasse nach Anspruch 1, wobei X gleich ist.

6. Zweikomponenten-Mörtelmasse nach einem der vorangehenden Ansprüche, wobei der Ligand L aus der aus Acetoacetat, Phosphat, Phosphit, Sulfat, Sulfit, CO, CN, Cyclopentyl und Pentamethylcyclopentyl bestehenden Gruppe ausgewählt ist.

7. Zweikomponenten-Mörtelmasse nach einem der vorangehenden Ansprüche, wobei das Additiv ausgewählt ist aus der Trimethylphosphat, Triethylphosphat, Triethylborat, Triethylaluminat, Triisopropylborat, Tributylborat, Tetraethyltitanat, Tetraisopropyltitanat, Tetraethylzirkonat und Tetrabutylzirkonat bestehenden Gruppe.

8. Zweikomponenten-Mörtelmasse nach einem der vorangehenden Ansprüche, wobei das Additiv in einer Menge von 0,001 - 10 Gew.-% vorliegt, bezogen auf das Gesamtgewicht der Mörtelmasse.

9. Mörtelmasse nach einem der vorangehenden Ansprüche, **dadurch gekennzeichnet, dass** die Harzkomponente (A) und/oder die Härterkomponente (B) als weiteren Bestandteil mindestens ein Thixotropiermittel enthält.

10. Mörtelmasse nach einem der vorangehenden Ansprüche, **dadurch gekennzeichnet, dass** die Harzkomponente (A) und/oder die Härterkomponente (B) als weiteren Bestandteil mindestens einen anorganischen Füllstoff enthält.

11. Mörtelmasse nach einem der vorangehenden Ansprüche, **dadurch gekennzeichnet, dass** die Masse in einer Patrone, einer Kartusche oder einem Folienbeutel vorliegt, wobei die Harzkomponente (A) und die Härterkomponente (B) in voneinander getrennten Kammern angeordnet sind.

12. Verwendung der Zweikomponenten-Mörtelmasse gemäß einem der vorangehenden Ansprüche zur chemischen Befestigung von Befestigungsmitteln wie Ankergewindestangen, Bewehrungseisen, Gewindehülsen und Schrauben, in Bohrlöchern, die in einem mineralischen Untergrund vorliegen.
